# EUROPEAN PATENT APPLICATION

(11) **EP 4 822 676 A1**
(43) Date of publication of application: **14.10.2026**
(21) Application number: 25195639.7
(22) Date of filing: 13.08.2025
(51) Int. Cl.: G08G 5/76

(54) **METHOD, COMPUTER-READABLE MEDIUM AND COMPUTING DEVICE FOR DETERMINING HOLDOVER OR ALLOWANCE TIMES**

(30) Priority: 11.04.2025 US 202563787439 P
(71) Applicant: APS Aviation Inc., Saint-Laurent, QC H4T 2B5 (CA)
(72) Inventor: RUGGI, Marco, Saint-Laurent, H4T 2B5 (CA); D'AVIRRO, Giovanni, Saint-Laurent, H4T 2B5 (CA); KITCHENER, Peter, Saint-Laurent, H4T 2B5 (CA); BROWN, Jennifer, Saint-Laurent, H4T 2B5 (CA); BERNIER, Chloe, Saint-Laurent, H4T 2B5 (CA); FALVO, Ben, Saint-Laurent, H4T 2B5 (CA); GIGAITE, Akvile, Saint-Laurent, H4T 2B5 (CA)
(74) Representative: Locas, Davide

(57) **Abstract**

A computer-implemented method determines a holdover time or allowance time for an aircraft. The method entails receiving METAR/SPECI data for an airport where the aircraft is located, decoding the METAR/SPECI data to extract precipitation conditions, creating a query based on the precipitation conditions, and communicating the query to a holdover/allowance time database. If the holdover time database contains holdover/allowance time data for the precipitation conditions, the method entails verifying that the precipitation conditions map to a predefined precipitation type of the holdover/allowance time application and auto-populating the precipitation conditions in the holdover/allowance time application. If the holdover/allowance time database does not contain holdover/allowance time data for the precipitation conditions, the method entails displaying by the holdover/allowance time application a prompt to receive user input to manually populate the precipitation conditions. The method further includes displaying by the holdover/allowance time application the holdover/allowance time for the precipitation conditions.

## Description

### TIMES

### TECHNICAL FIELD

The present invention relates generally to aircraft de-icing or anti-icing technologies and, more particularly, to techniques for techniques for determining holdover or allowance times.

### BACKGROUND

In the aviation industry, it is now well known that even a small amount of ice, snow or frost can pose a hazard to an aircraft as the ice, snow or frost can disrupt airflow over vital lift and control surfaces of the aircraft. Ice, snow or frost can severely degrade lift, increase weight and drag and impair manoeuvrability of control surfaces. It is now well known in the aviation industry to apply an aircraft de-icing fluid (ADF), aircraft anti-icing fluid (AAF) or an aircraft de-icing and anti-icing fluid (ADAF) to the aircraft prior to takeoff.

Once applied to the aircraft, these fluids are effective for a limited amount of time, depending on weather conditions, such as precipitation and temperature, and the type of fluid. This time is known as a holdover time or allowance time. The Federal Aviation Administration and Transport Canada publish holdover or allowance times for various types of fluids. Allowance times relate to weather conditions involving ice pellets or small hail. Holdover times relate to all other conditions. The flight crew uses the holdover time or allowance time to assess whether it is safe to take off or whether the aircraft should return to the de-icing/anti-icing bay for further de-icing/anti-icing.

Airports typically broadcast weather conditions as routine coded weather reports in a METAR format. METAR stands for Meteorological Aerodrome Report (METAR), also known as Meteorological Terminal Aviation Routine Weather Report, Meteorological Terminal Air Report or Meteorological Airfield Report. The airport may broadcast METAR reports every hour or half hour. If weather conditions change quickly or unexpectedly, the airport broadcasts a **SPECI** report, i.e. a special weather report in the same format at the METAR report.

A longstanding issue with the determination of holdover or allowance times is that it is difficult and time-consuming for the flight crew to interpret encoded weather data broadcast by an airport, such as **METAR/SPECI** data, so as to efficiently and accurately determine the appropriate holdover time or allowance time for the weather conditions provided by the encoded weather data.

Accordingly, there is a need in the aviation industry for an improved tool to determine holdover times from encoded weather data such as **METAR/SPECI** data.

### SUMMARY

Disclosed herein is a system, method and computer-readable medium for determining holdover or allowance times for an aircraft from encoded weather data, such as METAR data, that is broadcast by an airport where the aircraft is located.

One aspect of the invention is a computer-implemented method that determines a holdover time or allowance time for an aircraft. The method entails receiving **METAR/SPECI** data for an airport where the aircraft is located, decoding the **METAR/SPECI** data to extract precipitation conditions, creating a query based on the precipitation conditions, and communicating the query to a holdover/allowance time database. If the holdover time database contains holdover/allowance time data for the precipitation conditions, the method entails verifying that the precipitation conditions map to a predefined precipitation type of the holdover/allowance time application and auto-populating the precipitation conditions in the holdover/allowance time application. If the holdover/allowance time database does not contain holdover/allowance time data for the precipitation conditions, the method entails displaying by the holdover/allowance time application a prompt to receive user input to manually populate the precipitation conditions. The method further includes displaying by the holdover/allowance time application the holdover/allowance time for the precipitation conditions.

A further aspect of the invention is a non-transitory computer-readable medium comprising computer-readable instructions in software code which when stored in a memory and executed by a processor of a computing device cause the computing device to perform the above method and/or to provide the holdover/allowance time application. In other words, the code causes the computing device to receive METAR/SPECI data for an airport where the aircraft is located, decode the METAR/SPECI data to extract precipitation conditions, create a query based on the precipitation conditions, and communicate the query to a holdover/allowance time database. If the holdover time database contains holdover/allowance time data for the precipitation conditions, the code causes the computing device to verify that the precipitation conditions map to a predefined precipitation type of the holdover/allowance time application and auto-populate the precipitation conditions in the holdover/allowance time application. If the holdover/allowance time database does not contain holdover/allowance time data for the precipitation conditions, the code causes the computing device to display (by the holdover/allowance time application) a prompt to receive user input to manually populate the precipitation conditions. The code further causes the computing device to display (by the holdover/allowance time application) the holdover/allowance time for the precipitation conditions.

Another aspect of the invention is a computing device comprising a memory and a processor operatively coupled to the memory for storing and executing the holdover/allowance time application. In other words, the processor and memory of the computing device are configured to receive METAR/SPECI data for an airport where the aircraft is located, decode the METAR/SPECI data to extract precipitation conditions, create a query based on the precipitation conditions, and communicate the query to a holdover/allowance time database. If the holdover time database contains holdover/allowance time data for the precipitation conditions, the processor and memory of the computing device verify that the precipitation conditions map to a predefined precipitation type of the holdover/allowance time application and auto-populate the precipitation conditions in the holdover/allowance time application. If the holdover/allowance time database does not contain holdover/allowance time data for the precipitation conditions, the processor and memory of the computing device display a prompt to receive user input to manually populate the precipitation conditions. The processor and memory of the computing device display (by the holdover/allowance time application) the holdover/allowance time for the precipitation conditions.

The foregoing presents a simplified summary of the invention in order to provide a basic understanding of some aspects of the invention. This summary is not an exhaustive overview of the invention. It is not intended to identify essential, key or critical elements of the invention or to delineate the scope of the invention. Its sole purpose is to present some concepts in a simplified form as a prelude to the more detailed description that is discussed later. Other aspects of the invention are described below in relation to the accompanying drawings.

### BRIEF DESCRIPTION OF THE DRAWINGS

Further features and advantages of the present technology will become apparent from the following detailed description, taken in combination with the appended drawings, in which:
FIG. 1 depicts an aircraft being sprayed with a de-icing/anti-icing fluid at an airport while a computing device onboard the aircraft receives METAR/SPECI data to determine a holdover/allowance time in accordance with an embodiment of the present invention;
FIG. 2 depicts a flowchart outlining a general method in accordance with an embodiment of the present invention;
FIG. 3 depicts a flowchart presenting a first part of a more detailed method in accordance with one specific embodiment of the present invention;
FIG. 4 depicts a flowchart as a continuation of the flowchart of FIG. 3 presenting a second part of the method;
FIG. 5 depicts a flowchart as a continuation of the flowchart of FIG. 4 presenting a third part of the method;
FIG. 6 depicts a flowchart as a continuation of the flowchart of FIG. 5 presenting a fourth part of the method;
FIG. 7 depicts a flowchart presenting an illustrative example of how the first part of the method of FIG. 3 processes METAR/SPECI data;
FIG. 8 depicts a flowchart presenting how in this example the second part of the method operates;
FIG. 9 depicts a flowchart presenting how in this example the third part of the method operates; and
FIG. 10 depicts a flowchart presenting how in this example the fourth part of the method operates.

It will be noted that throughout the appended drawings, like features are identified by like reference numerals.

### DETAILED DESCRIPTION

The following is a description of a method, non-transitory computer-readable medium (i.e. software application) and computing device for determining a holdover time or allowance time for an aircraft to safely take off after application of de-icing and/or anti-icing fluids.

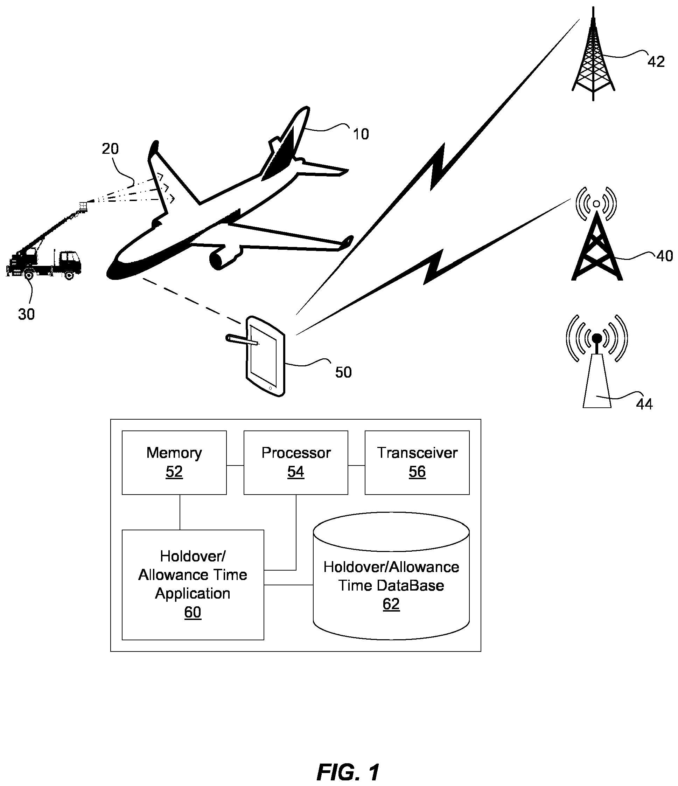

FIG. 1 depicts an aircraft denoted by reference numeral 10 that is being sprayed with a de-icing/anti-icing fluid 20 by a de-icing/anti-icing truck 30 at an airport before takeoff. One or more transmitters 40, 42, 44 at the airport transmit(s) or broadcast(s) METAR/SPECI data. For example, the METAR/SPECI data may be broadcast by an ACARS VHF transmitter 40, by a cellular base transceiver station 42, or a Wi-Fi access point 44. It will be appreciated that any other suitable wireless protocol may be used to transmit the METAR/SPECI data. For the purposes of this specification, the expression "METAR/SPECI data" shall mean either METAR data or SPECI data. The aircraft 10 or a computing device 50 onboard the aircraft receives the METAR/SPECI data containing a METAR weather report or SPECI weather report. In other words, a flight crew operating the aircraft use the computing device 50 to receive and decode (interpret) the METAR/SPECI data for the METAR weather report or SPECI weather report. The computing device 50 has a memory 52 and a processor 54 coupled to the memory for storing and executing a holdover/allowance time application 60 for determining a holdover or allowance time based on weather conditions decoded (i.e. extracted) from the METAR/SPECI data. The computing device 50 includes a transceiver 56, e.g. a radiofrequency transceiver, to receive the METAR/SPECI data from the transmitter 40. The transceiver 56 may be, for example, a cellular transceiver, Wi-Fi transceiver or other wireless data transceiver to receive METAR/SPECI data from a web server or ACARS over VoIP. The transceiver 56 may be a VHF transceiver to receive ACARS messages. The computing device may include a data interface to connect to a data port of the aircraft to receive the METAR/SPECI data via an ACARS transmission to the aircraft. The holdover/allowance time application 60 uses weather conditions, such as precipitation conditions and temperature, extracted from the METAR/SPECI data to determine the holdover time or allowance time. The holdover/allowance time application 60 may query a holdover/allowance time database 62 to obtain the holder time or allowance time. The holdover/allowance time database may be locally stored in the memory 52. Alternatively, in another implementation, the database 62 may be remotely stored by a remote server and accessible by using the transceiver to fetch data from the database. The computing device 50 may be, for example, a tablet or mobile device.

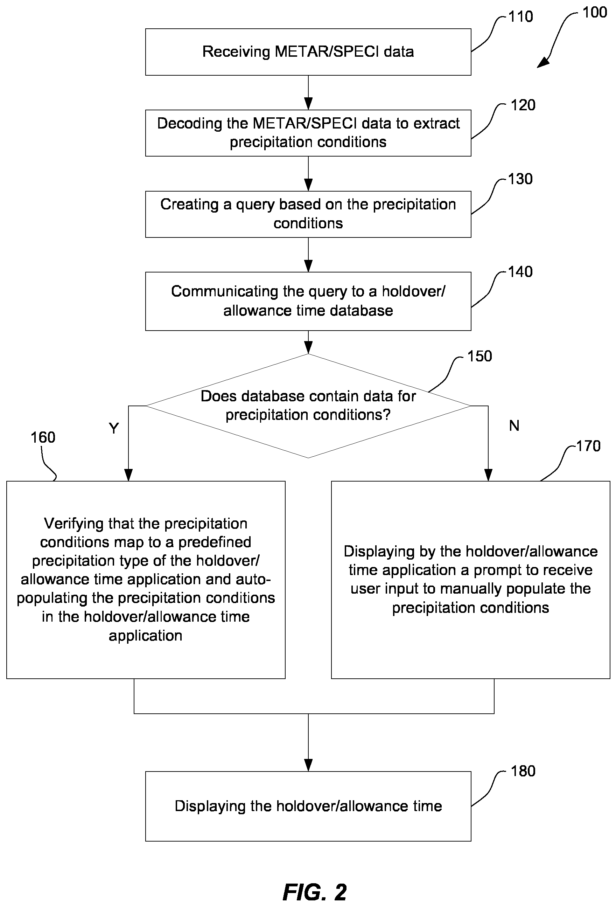

FIG. 2 depicts a flowchart outlining a computer-implemented method that determines a holdover time or allowance time for the aircraft after a de-icing/anti-icing fluid has been applied to the aircraft. As depicted in FIG. 1, the method 100 entails a step, act or operation 110 of receiving METAR/SPECI data for an airport where the aircraft is located, a step, act or operation 120 of decoding the METAR/SPECI data to extract precipitation conditions, a step, act or operation 130 of creating a query based on the precipitation conditions, and a step, act or operation 140 of communicating the query to a holdover/allowance time database. The method 100 involves the step, act or operation 150 of determining if the holdover/allowance time database contains data (i.e. holdover or allowance times) for the precipitation conditions. If the holdover/allowance time database contains holdover/allowance time data for the precipitation conditions, the method 100 entails a step, act or operation 160 of verifying that the precipitation conditions map to a predefined precipitation type of the holdover/allowance time application and auto-populating the precipitation conditions in the holdover/allowance time application. If the holdover/allowance time database does not contain holdover/allowance time data for the precipitation conditions, the method 100 entails a step, act or operation 170 of displaying by the holdover/allowance time application a prompt to receive user input to manually populate the precipitation conditions. The method 100 further includes a step, act or operation 180 of displaying, by the holdover/allowance time application, the holdover/allowance time for the precipitation conditions.

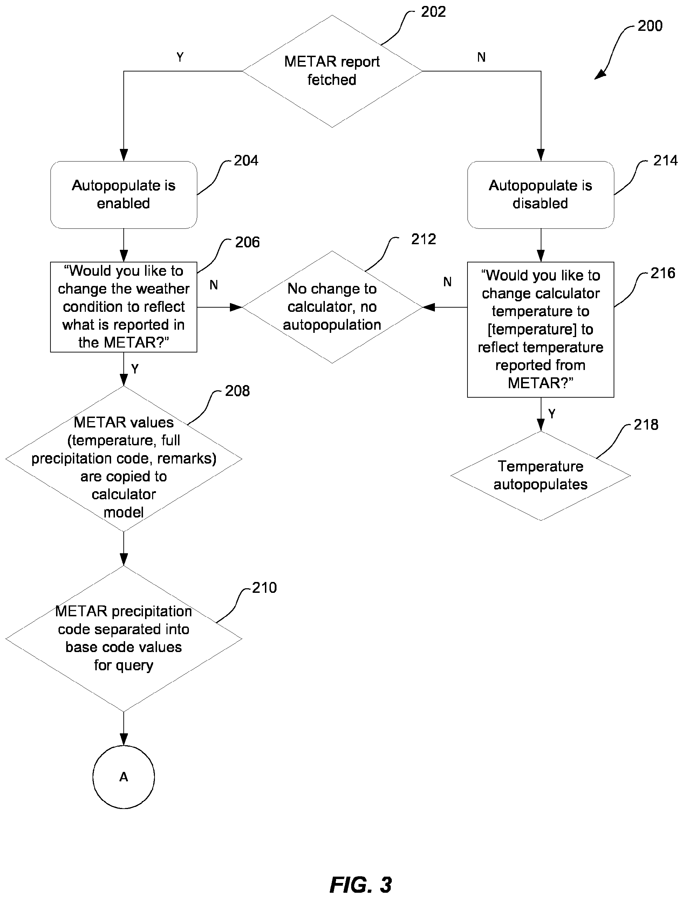

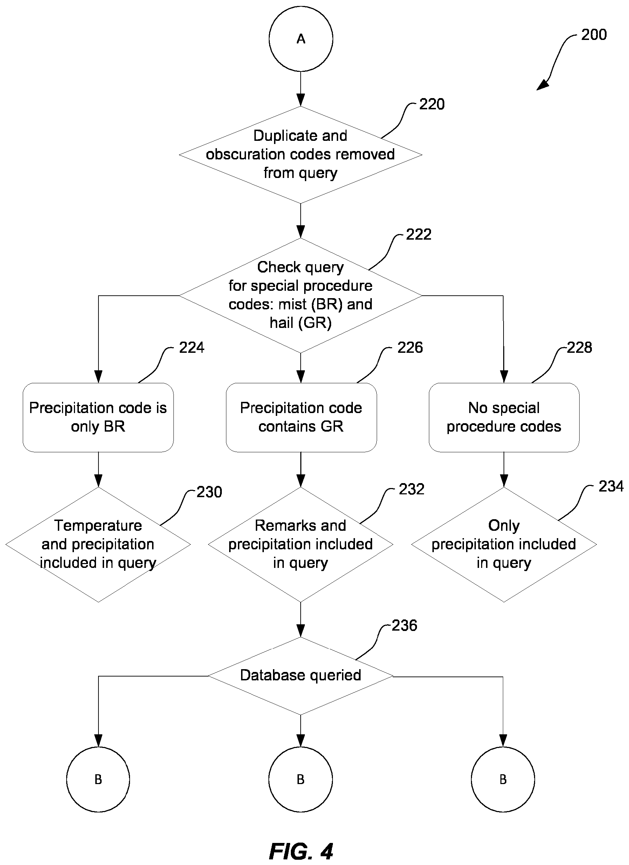

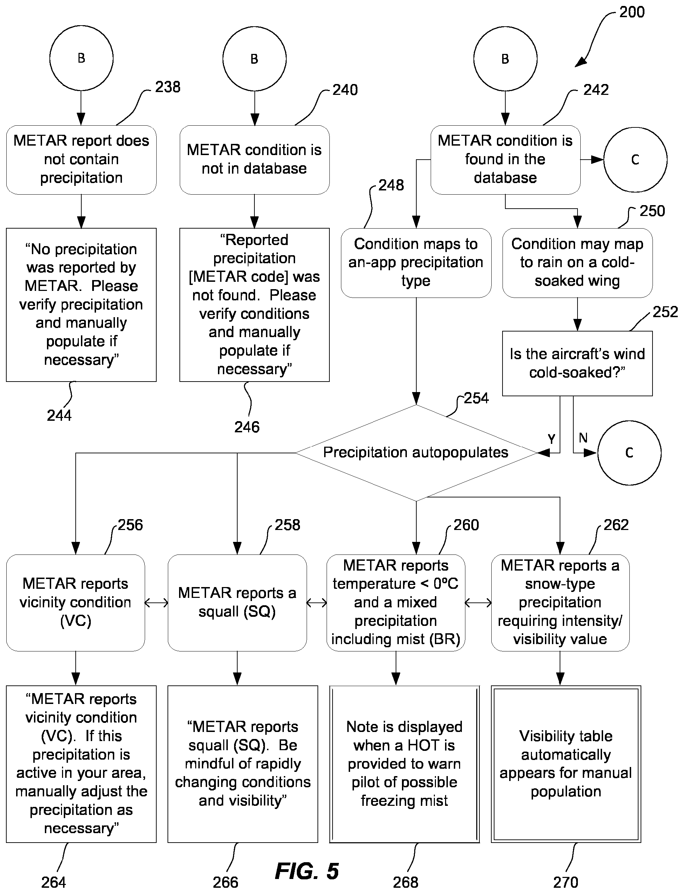

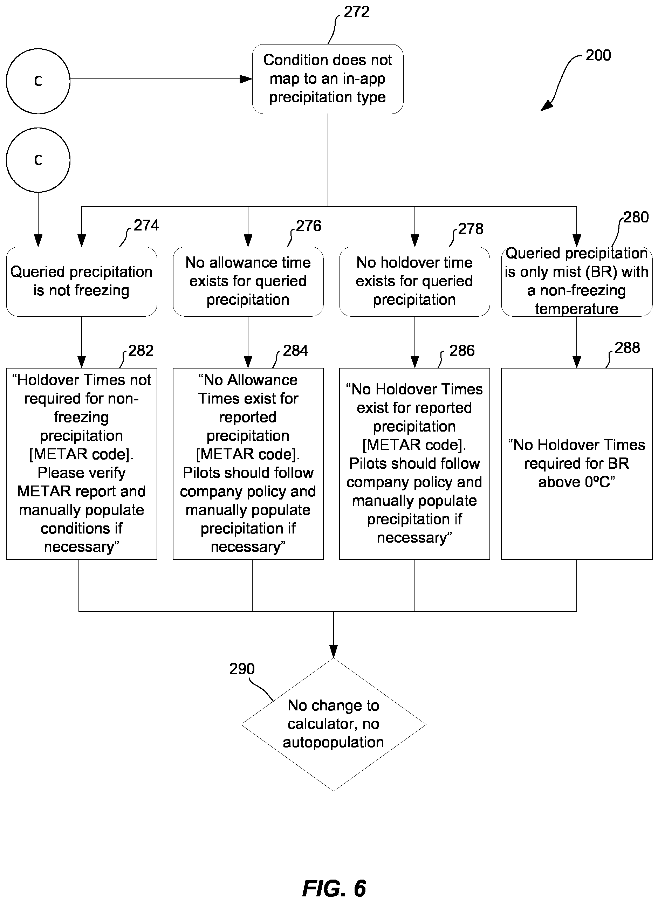

FIGS. 3-6 depicts a more detailed method in accordance with a specific embodiment of the present invention. Specifically, FIG. 3 depicts a flowchart presenting a first part of a more detailed method in accordance with one specific embodiment of the present invention. FIG. 4 depicts a flowchart as a continuation of the flowchart of FIG. 3 presenting a second part of the method. FIG. 5 depicts a flowchart as a continuation of the flowchart of FIG. 4 presenting a third part of the method. FIG. 6 depicts a flowchart as a continuation of the flowchart of FIG. 5 presenting a fourth part of the method. In these flowcharts, the diamond-shaped steps, acts or operations represent actions performed by the holdover/allowance time application (hereinafter simply the "application"). The rounded boxes represent conditions. The rectangular boxes represent popup alerts generated and presented by the application. The double-bordered rectangular boxes represent application displays (effects on calculator screen).

As depicted by way of example in FIG, 3, the method generally denoted by reference numeral 200 entails a step, act or operation 202 of obtaining, receiving or fetching the METAR/SPECI data, i.e. the METAR/SPECI report. Receiving the METAR/SPECI data may be done by fetching the METAR/SPECI data from a web server. Alternatively, receiving the METAR/SPECI data may be done by receiving the METAR/SPECI data via ACARS.

The method 200 optionally involves determining if the holdover/allowance time application has auto-population enabled (at step 204) or disabled (at step 214). If auto-population is enabled, the application displays a prompt to the user (at step 206) by asking the user to confirm if METAR weather is to be used. For example, step 206 may involve the application displaying a question such as "Would you like to change the weather condition to reflect what is reported in the METAR?". If the user replies yes, the METAR values (temperature, full precipitation code, and remarks are copied at step 208 to the application. In a specific implementation, the application includes a calculator (or calculator module). In this specific implementation, the METAR values (temperature, full precipitation code, and remarks are copied at step 208 to the calculator (or calculator model or calculator module) of the application. At step 210 of the method, the METAR precipitation codes are separated into base code values for formulating a queriable string (also referred to herein as a query). If at step 206, the user replies no, then no change is made to the calculator and no auto-population is performed at step 212. If auto-population is disabled (step 214), the application may display a prompt at step 216 to ask the user "Would you like to change the calculator temperature to [temperature] to reflect the temperature reported from METAR?". If the user replies no, then no change is made to the calculator and no auto-population is performed at step 212. If the user replies yes, then the temperature auto-populates at step 218. In one embodiment, the application may also obtain (e.g. via manual population or auto-population) the type of de-icing/anti-icing fluid. This may be manually entered by the pilot based on a communication with the de-icing/anti-icing ground crew or it may be received automatically as data over a wireless link from the de-icing/anti-icing truck 30 or from the airport.

Referring to FIG. 4, which presents a continuation of the flowchart of FIG. 3, the method 200 proceeds after step 210 to step 220 of removing duplicate and obscuration codes from the query. As further depicted in FIG. 4, the method 200 proceeds to step 222 in which the query is checked for special procedure codes such as mist (BR) and hail (GR).

As depicted by FIG. 4, if the precipitation code is only BR (step 224), then temperature and precipitation are included in the query at step 230. If precipitation code contains GR (step 226), then remarks and precipitation are included in the query at step 232. If there are no special procedure codes (step 228), then only precipitation is included in the query at step 234. As further depicted by FIG. 4, after steps 230, 232, 234, the method 200 then proceeds to step 236 in which the database is queried. In other words, at step 236, the application sends the query to the database to determine if the database contains data corresponding to the weather conditions.

From the foregoing, it is to be understood that decoding the METAR/SPECI data comprises steps of (i) separating a precipitation code into base code values for creating the query, and (ii) removing duplicate and obscuration codes for creating the query and identifying precipitation codes for mist and hail. From the foregoing, it is also to be understood that creating the query comprises steps of: (i) if the precipitation code is only mist, then creating the query by including temperature and the precipitation conditions, (ii) if the precipitation code includes hail, then creating the query by including weather remarks and the precipitation conditions, and (iii) if the precipitation code includes neither mist nor hail, then creating the query by including only the precipitation conditions.

In another embodiment, the special procedure code may include, for example, fog (FG). The query in that case includes temperature. As another example, the special procedure codes include fog and hail (FG/GR) in which temperature and remarks are both included within the query. It will be appreciated that the application may be modified to include or remove various notes/alerts based on different types of special procedure codes. In another embodiment, the special condition procedure may involve or require a location-based component in the query. For example, the application may detect that the special procedure code is small hail (GS) in which case the application may require a location-based component in the query. The application may derive the location-based component from location data obtained by the computing device or from the aircraft. The location-based component may for example be GNSS position data.

The method 200 proceeds as shown in FIG. 5. After querying the database at step 236 in FIG. 4, the method proceeds to one of steps 238, 240 or 242 as shown in FIG. 5. If the METAR report does not contain precipitation (step 238), the application displays a notification (step 244) such as "No precipitation was reported by METAR. Please verify precipitation and manually populate if necessary". If the METAR condition is not found in the database (step 240), the application displays a notification (step 246) such as "Reported precipitation [METAR code] was not found. Please verify conditions and manually populate if necessary". If the METAR condition is found in the database (step 242), the application determines if the condition maps to an-app precipitation type (i.e. determining if the condition maps to a predefined precipitation type of the holdover time application). If the condition maps to a predefined precipitation type of the holdover time application, the precipitation auto-populates at step 254. The application may also determine if the condition maps to rain on a cold-soaked wing at step 250. If the aircraft's wing is cold soaked (step 252), then the precipitation auto-populates at step 254.

As further depicted in FIG. 5, after the step 254, the method proceeds to one or more of step 256, 258, 260 and 262.

As depicted in FIG. 5, after the step 254, the method may identify a vicinity condition (VC) from the METAR/SPECI data at step 256. In response to identifying a vicinity condition at step 256, the holdover/allowance time application prompts the user to manually adjust the precipitation conditions at step 264.

As further depicted in FIG. 5, after the step 254, the method may identify a squall (SQ) from the METAR/SPECI data at step 258. In response to identifying the squall at step 258, the holdover/allowance time application displays an alert to be mindful of rapidly changing conditions and visibility at step 266.

As further depicted in FIG. 5, after the step 254, the method may identify a temperature below zero degrees Celsius and mixed precipitation including mist at step 260. In response to identifying the temperature below zero degrees Celsius and the mixed precipitation including mist at step 260, the holdover/allowance time application displays a warning of possible freezing mist at step 268.

As further depicted in FIG. 5, after the step 254, the method may identify a snow-type precipitation requiring an intensity/visibility value at step 262. In response to identifying the snow-type precipitation requiring the intensity/visibility value at step 262, the holdover/allowance time application displays a visibility table for manual population at step 270.

As noted above, the application may determine by querying the database if the precipitation conditions map to rain on a cold-soaked wing at step 250. If the wing of the aircraft is not cold-soaked at step 252, then the method proceeds to step 274 of FIG. 6. If the wing of the aircraft is not cold-soaked, then the method entails displaying a notification that precipitation conditions extracted from the METAR/SPECI data are not freezing and prompting the user to manually populate the precipitation conditions at step 282.

As also noted above, if the METAR condition is found in the database but does not map to an-app precipitation type, then the method proceeds to step 272 in which the application notes that the condition does not map to a predefined precipitation type of the application. As depicted in FIG. 6, after step 272, the method determines which one of conditions 274, 276, 278 or 280 apply to the precipitation conditions extracted from the METAR/SPEC data. In other words, in response to determining that the precipitation conditions do not map to a predefined precipitation type of the holdover time application, the method may determine that the queried precipitation is not freezing (step 274), that no allowance time exists for the queried precipitation (step 276), that no holdover time exists for the queried precipitation (step 278) or that the queried precipitation is only mist (BR) with non-freezing temperature (at step 280).

As depicted in FIG. 6, if the queried precipitation conditions are determined to be non-freezing at step 274, the method performs a step 282 of displaying a notification that holdover times are not required and prompting the pilot/user to verity the METAR report and manually populate conditions if necessary. The notification may read for example: "Holdover Times not required for non-freezing precipitation [METAR code]. Please verify METAR report and manually populate conditions if necessary." Alternatively, if no allowance time is found for the queried precipitation at step 276, the method may perform a step 284 of displaying a message or notification that no allowance time exists for the precipitation conditions and prompting a user to manually populate the precipitation conditions. For example, the notification may read "No Allowance Times exist for reported precipitation [METAR code]. Pilots should follow company policy and manually populate precipitation if necessary". Alternatively, if no holdover time exists for the queried precipitation at step 278, the method may perform a step 286 of displaying a message that no holdover time exists for the precipitation conditions and prompting a user to manually populate the precipitation conditions. For example, the notification may read "No Holdover Times exist for reported precipitation [METAR code]. Pilots should follow company policy and manually populate precipitation if necessary". Alternatively, if the queried precipitation is only mist with a non-freezing temperature at step 280, the method may perform a step 288 of displaying a notification that no holdover time exists for the precipitation conditions for mist (BR) above zero degrees Celsius. As further depicted in FIG. 6, after any one of steps 282, 284, 286 or 290, the method proceeds to step 290 in which the application makes no change to the calculator and performs no auto-population.

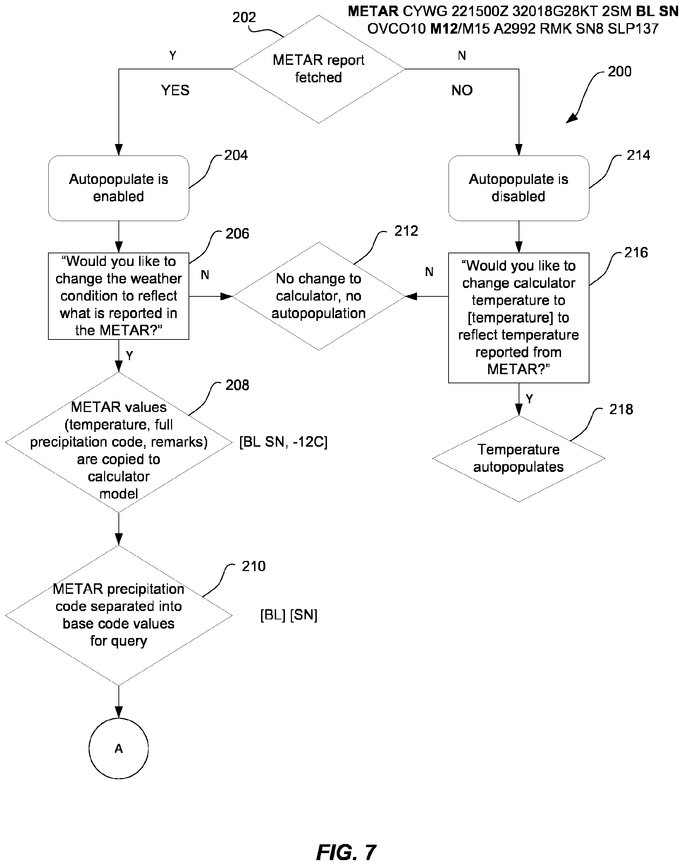

To further illustrate the function of the method 200, an example is presented in FIGS. 7-10. In the example of FIGS. 7-10, an example METAR report is decoded to obtain weather conditions to query a database. The flowcharts of FIGS. 7-10 are identical to the flowcharts of FIGS. 3-6 except for annotations that present how the METAR data is used to perform the method.

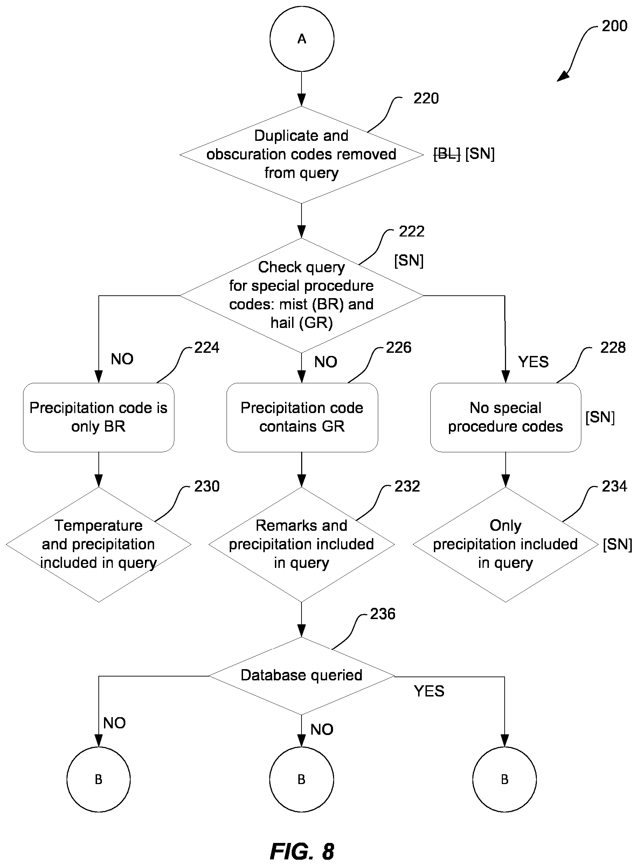

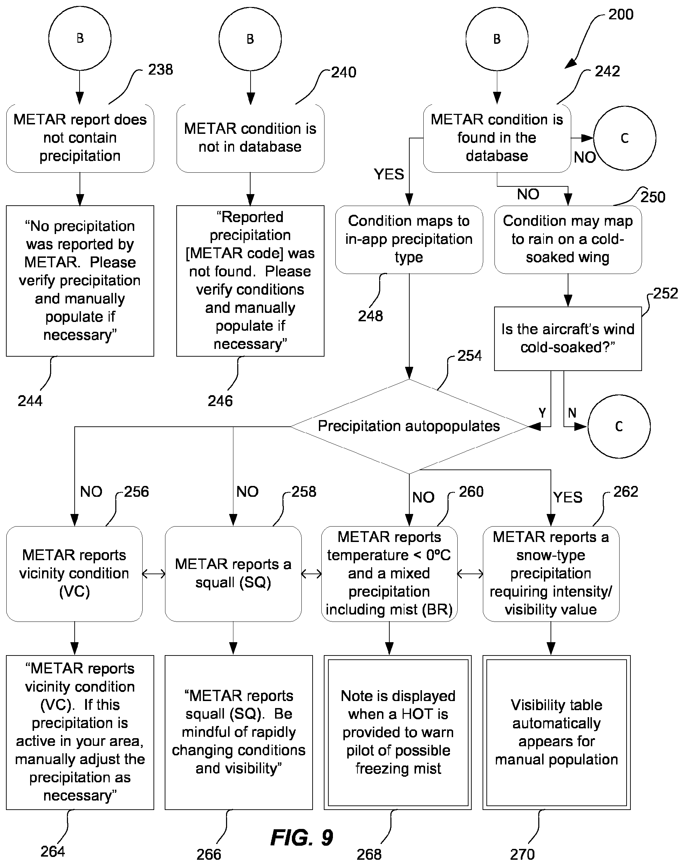

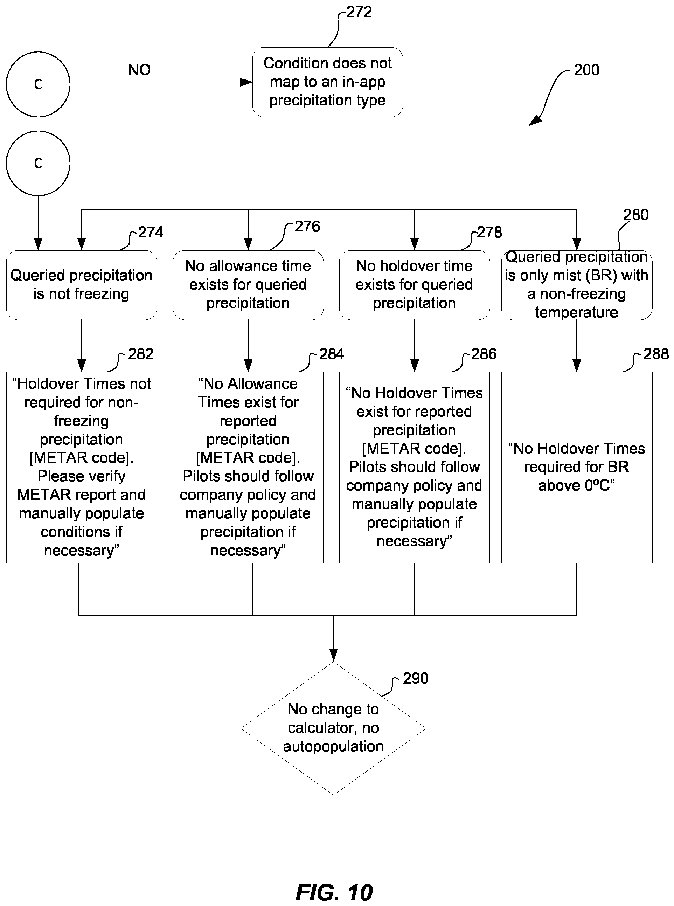

In the example of FIGS. 7-10, METAR/SPECI data is received from the airport using one of the techniques described above. In this example, the METAR report, which is fetched at step 202, contains encoded METAR data. In this example, as shown in FIG. 7, the encoded METAR data is the following: METAR CYWG 221500Z 32018G28KT 2SM BL SN OVCO10 M12/M15 A2992 RMK SN8 SLP137. In this example, the application has auto-populate enabled (step 204). In the example shown in FIG. 7, the example METAR values [BL SN 12C] are copied to the calculator (or calculator model) at step 208. The METAR precipitation codes are separated at step 210 to start generating a query as follows: [BL] [SN]. At step 220 as shown in FIG. 8, duplicate and obscuration codes are removed from the query. In this example, [BL] is removed while [SN] is retained. At step 222 of FIG. 8, the application checks for special procedure codes like mist (BR) and hail (GR). In this example, there are no special procedure codes so the method proceeds via step 228 as shown in FIG. 8. At step 234, the method proceeds by including only precipitation codes in the query, e.g. only [SN] is included in the query. The database is queried at step 236. In this example, as shown in FIG. 9, the METAR condition is found in the database at step 242. In this example, the application determines that the METAR condition maps to an in-app precipitation type (step 248). The method then proceeds to step 254 where the application auto-populates the precipitation conditions. Subsequently, as shown in FIG. 9, the application determines if there is a vicinity condition as step 256, if there is a reported squall at step 258, if the METAR reports temperature below zero Celsius and a mixed precipitation including mist (BR) at step 260 and/or if the METAR reports a snow-type precipitation requiring intensity/visibility value at step 262. In this example, only snow-type precipitation conditions 262 are present but none of the other conditions 256, 258, 260 are present so the application displays the notification 270 but does not display any of the notifications 264, 266, 268. The notification 270 includes a visibility table that automatically appears for manual population. With regard to FIG. 10, in this example, the METAR condition is found in the database (step 242) and therefore the method does not proceed to step 272 in FIG. 10. Therefore, none of the conditions 274, 276, 278 or 280 are applicable in this example. Accordingly, none of the notifications 282, 284, 286 or 288 are displayed in this example.

In the flowcharts shown in FIGS. 3-10 and the related portions of the description above, any references to METAR data is meant to also encompass any SPECI data.

In one embodiment, the application may be a standalone application. Alternatively, in another embodiment, the application may be part of another application that provides other functionalities. For example, in one embodiment, the holdover/allowance time application may be part of an electronic flight bag (EFB) application. The application may optionally include further features or functions. For example, the application may provide a timer that starts after de-icing/anti-icing is complete to count down the remaining holdover time or remaining allowance time. Optionally, the application may provide an alert to the pilot or flight crew to notify the pilot or flight crew that the remaining holdover time or remaining allowance time is about to expire. Optionally, the application may predict if the remaining holdover time or remaining allowance time is sufficient or insufficient and display a notification to the pilot. For example, the application may predict if the remaining holdover time or remaining allowance time is sufficient or insufficient based on the aircraft's position in queue for takeoff.

In the embodiments described above, the method, computing device and computer-readable medium (i.e. the application) determine the holdover time or allowance time based solely on the METAR/SPECI data. In other embodiments, however, a modified version of the application may optionally be configured (coded) to validate or refine the weather conditions extracted from the METAR/SPECI data using one or more optional weather sensors. The one or more optional weather sensors may include an air temperature sensor to sense air temperature, an aircraft skin temperature sensor to sense aircraft skin temperature, a fuel temperature sensor to sense a fuel temperature, a wind sensor to sense wind speed and/or direction, a precipitation sensor to sense precipitation, a visibility sensor or camera to sense visibility/obscuration and/or precipitation type and/or solar load, or an icing sensor to sense icing. The one or more weather sensors may be aircraft sensors that are integrated into the aircraft and which provide data to the computing device executing the application via a data port. In other implementations, some of the weather sensors may be device sensors that are integrated into the computing device. The flight crew may use the computing device for example before entering the aircraft to obtain weather conditions. For example, the flight crew may use the computing device outside the aircraft, e.g. before entering the aircraft, to capture weather conditions to validate or refine the METAR data. For example, the computing device can have a temperature sensor to measure temperature. For example, the computing device can have a camera to capture visibility/obscuration conditions, solar load, type of precipitation, or other weather condition.

These methods can be implemented in hardware, software, firmware or as any suitable combination thereof. That is, if implemented as software, the computer-readable medium comprises instructions in code which when loaded into memory and executed on a processor of a computing device such as a desktop, laptop, tablet or mobile device causes the computing device to perform any of the foregoing method steps. These method steps may be implemented as software, i.e. as coded instructions stored on a computer readable medium which performs the foregoing steps when the computer readable medium is loaded into memory and executed by the microprocessor of the computing device. A computer readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc. For the purposes of this specification, the expression "module" is used expansively to mean any software, hardware, firmware, or combination thereof that performs a particular task, operation, function or a plurality of related tasks, operations or functions. When used in the context of software, the module may be a complete (standalone) piece of software, a software component, or a part of software having one or more routines or a subset of code that performs a discrete task, operation or function or a plurality or related tasks, operations or functions. Software modules have program code (machine-readable code) that may be stored in one or more memories on one or more discrete computing devices. The software modules may be executed by the same processor or by discrete processors of the same or different computing devices.

For the purposes of interpreting this specification, when referring to elements of various embodiments of the present invention, the articles "a", "an", "the" and "said" are intended to mean that there are one or more of the elements. The terms "comprising", "including", "having", "entailing" and "involving", and verb tense variants thereof, are intended to be inclusive and open-ended by which it is meant that there may be additional elements other than the listed elements.

This invention has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right is therefore intended to be limited solely by the appended claims.

## Claims

1. A computer-implemented method for determining a holdover time or allowance time for an aircraft (10), the method comprising:
receiving METAR/SPECI data (110) for an airport where the aircraft (10) is located;
decoding the METAR/SPECI data to extract precipitation conditions (120);
creating a query based on the precipitation conditions (130);
communicating the query to a holdover/allowance time database (140);
if the holdover time database contains holdover/allowance time data for the precipitation conditions, verifying that the precipitation conditions map to a predefined precipitation type of the holdover/allowance time application and auto-populating the precipitation conditions in the holdover/allowance time application (160);
if the holdover/allowance time database does not contain holdover/allowance time data for the precipitation conditions, displaying by the holdover/allowance time application a prompt to receive user input to manually populate the precipitation conditions (170); and
displaying, by the holdover/allowance time application, the holdover/allowance time for the precipitation conditions (180).

2. The method of claim 1 wherein decoding the METAR/SPECI data (120) comprises:
separating a precipitation code into base code values for creating the query;
removing duplicate and obscuration codes for creating the query; and
identifying precipitation codes for mist and hail; and
wherein creating the query comprises:
if the precipitation code is only mist, then creating the query by including temperature and the precipitation conditions;
if the precipitation code includes hail, then creating the query by including weather remarks and the precipitation conditions; and
if the precipitation code includes neither mist nor hail, then creating the query by including only the precipitation conditions.

3. The method of claim 1 or 2 comprising:
identifying a vicinity condition (VC) from the METAR/SPECI data (256);
in response to identifying a vicinity condition (VC), the holdover/allowance time application prompts the user to manually adjust the precipitation conditions (264).

4. The method according to any one of the preceding claims comprising:
identifying a squall (SQ) from the METAR/SPECI data (258);
in response to identifying the squall (SQ), the holdover/allowance time application displays an alert to be mindful of rapidly changing conditions and visibility.

5. The method according to any one of the preceding claims comprising:
identifying a temperature below zero degrees Celsius and mixed precipitation including mist (260);
in response to identifying the temperature below zero degrees Celsius and the mixed precipitation including mist, the holdover/allowance time application displays a warning of possible freezing mist.

6. The method according to any one of the preceding claims comprising:
identifying a snow-type precipitation requiring an intensity/visibility value (262);
in response to identifying the snow-type precipitation requiring the intensity/visibility value, the holdover/allowance time application displays a visibility table for manual population.

7. The method according to any one of the preceding claims comprising:
determining if the precipitation conditions map to rain on a cold-soaked wing;
if a wing of the aircraft is cold-soaked, then auto-populating the precipitation conditions; and
if the wing of the aircraft is not cold-soaked, then displaying a notification that precipitation conditions extracted from the METAR/SPECI data are not freezing and prompting the user to manually populate the precipitation conditions.

8. The method according to any one of the preceding claims comprising:
in response to determining that the precipitation conditions do not map to a predefined precipitation type of the holdover time application:
displaying a prompt to manually populate the precipitation conditions if the precipitation conditions are non- freezing;
displaying a message that no allowance time exists for the precipitation conditions and prompting a user to manually populate the precipitation conditions;
displaying a message that no holdover time exists for the precipitation conditions and prompting a user to manually populate the precipitation conditions; and
displaying a notification that no holdover time exists for the precipitation conditions if the precipitation conditions are only non-freezing mist.

9. The method according to any one of the preceding claims wherein receiving the METAR/SPECI data comprises fetching the METAR/SPECI data from a web server.

10. The method according to any one of claims 1 to 8 wherein receiving the METAR/SPECI data comprises receiving the METAR/SPECI data via ACARS.

11. A non-transitory computer-readable medium comprising instructions in computer-readable code that are executable by a processor of a computing device to perform the method of any one of claims 1 to 10.

12. A non-transitory computer-readable medium comprising instructions in computer-readable code that are executable by a processor of a computing device to provide the holdover/allowance time application of any one of claims 1 to 10.

13. The non-transitory computer-readable medium of claim 12 wherein the holdover/allowance time application is part of an electronic flight bag (EFB) application.

14. A computing device comprising a memory and a processor operatively coupled to the memory for storing and executing the holdover/allowance time application of any one of claims 1 to 10.

15. The computing device of claim 14 comprising a radiofrequency transceiver to receive the METAR/SPECI data from a wireless transmitter at the airport or via an ACARS transmission to the aircraft..
